# EUROPEAN PATENT SPECIFICATION

(11) **EP 0 827 124 B1**
(45) Date of publication and mention of the grant of the patent: **03.12.2003**
(21) Application number: 97114677.4
(22) Date of filing: 25.08.1997
(51) Int. Cl.: G08G 1/0968

(54) **Vehicle navigation system with city name selection accelerator and medium for storage of programs thereof**
Fahrzeugsnavigationssystem mit Beschleunigung von Stadtnamenselektion und Programmspeichermedium
Système de navigation pour véhicule avec accélération de la sélection du nom de ville et stockage des programmes à cet effet

(30) Priority: 30.08.1996 JP 23102096
(43) Date of publication of application: 04.03.1998
(73) Proprietor: AISIN AW CO., LTD., Anjo-shi Aichi-ken 444-11 (JP)
(72) Inventor: Watanabe, Kazuyuki, c/o Aisin Aw Co., Ltd., Anjo-shi, Aichi 444-11 (JP)
(74) Representative: Pellmann, Hans-Bernd, Dipl.-Ing.

(56) References cited:
- EP-A- 0 642 108
- WO-A-95/04340
- DE-A- 3 510 481
- DE-A- 3 712 360
- US-A- 5 072 395

## Description

The present invention relates in general to mobile electronics and, in more particular, to land vehicle navigation apparatus and storage media storing programs therein which are capable of searching for registered locations or points upon input of a city name.

### 2. Description of the Prior Art

Conventionally, land vehicle navigation apparatus has been known which searches for a guidance route to a destination upon alphabet input of a target name such as the destination, pass-through point, and facility to visit, thereby providing guidance along the searched route. In cases where such apparatus is used in western countries including Europe, especially in some countries having the historical background of development as city nations, it is very likely that when searching for a registered location, an input is made using a city name or title as a target name.

However, where a search is made by input of such city name, since it is required that alphabet characters of a city name be input completely up to the last character thereof every time the search is to be made, an increased amount of operations are necessary until completion of the input procedure. This would result in troublesome work with usability decreased. In particular, where the names of cities around a present vehicle location are kept unknown to a vehicle operator, such as when she/he is in unfamiliar places, there is a drawback that the input procedure requires further troublesome and time-consuming key operations in "spelling out" the word of a city name in correct order.

WO 95/04340 discloses a method of and an apparatus for selecting a destination in a vehicle navigation system. In the known apparatus a display means, a scrolling means and a control means are provided for handling navigation data and location based data. The user of the apparatus scrolls through a plurality of destinations displayed on the display means which have been stored beforehand. Each destination is mentioned on the display in the form of a plurality of alphanumeric symbols and the destinations form an alphabetically and numerically organized list. A selecting means is provided to enable the user to select particular destinations. Consecutive destinations in the list are highlighted and it is further possible to jump to a subset of destinations beginning with the next or previous alphanumeric symbol, as compared to a currently highlighted destination.

### SUMMARY OF THE INVENTION

It is therefore an object of the present invention to provide an improved land navigation system capable of avoiding the problems encountered with the prior art.

It is another object of the invention to provide a vehicle navigation system capable of easily performing input operations when searching for a registered location upon input of a city name.

It is a further object of the invention to provide an information storage medium with built-in programs capable of easily performing input operations when searching for a registered location upon input of a city name.

To attain the foregoing objects the present invention provides a vehicle navigation system for performing route guidance by inputting a target name and performing a route search from a present position or a start location, as featured by including a controller for searching cities satisfying certain criteria and for outputting a prepared list, a visual indicator for displaying the city names as output from the controller, a selector for selecting a desired city name from the city names displayed at the visual indicator, wherein the controller makes a list of cities around the present position for selecting there from a desired city and searches for a destination located within the selected city.

These and other objects, features and advantages of the invention will be apparent from the following more particular description of preferred embodiments of the invention, as illustrated in the accompanying drawings.

### BRIEF DESCRIPTION OF THE DRAWINGS

Fig. 1 is a diagram showing a configuration of land vehicle navigation apparatus in accordance with one preferred embodiment of the invention.
Figs. 2A and 2B show a street data file as employed in the apparatus of Fig. 1.
Fig. 3 is a diagram for explanation of the flow of the entire system of the vehicle navigation apparatus embodying the invention.
Fig. 4 is a diagram showing a registered location data structure.
Figs. 5A and 5B are diagrams for explanation of a genre-dependent data structure.
Fig. 6 is a diagram showing a genre input screen.
Fig. 7 is a diagram showing one exemplary display image of a city name input screen.
Fig. 8 is a diagram showing an exemplary display image of an input screen with a list of five nearby cities.
Fig. 9 is a diagram showing a character input screen.
Fig. 10 is a flow diagram showing of a main input processing routine as in the vehicle navigation apparatus embodying the invention.
Fig. 11 is a flowchart of a genre input processing procedure of the apparatus.
Fig. 12 is a flowchart showing a city-name input processing procedure.
Fig. 13 is a flowchart of a remainder list number (matched item number) display processing procedure.
Fig. 14 is a flowchart of a search processing of the remainder list number using forward coincidence comparison techniques.

### DETAILED DESCRIPTION OF THE INVENTION

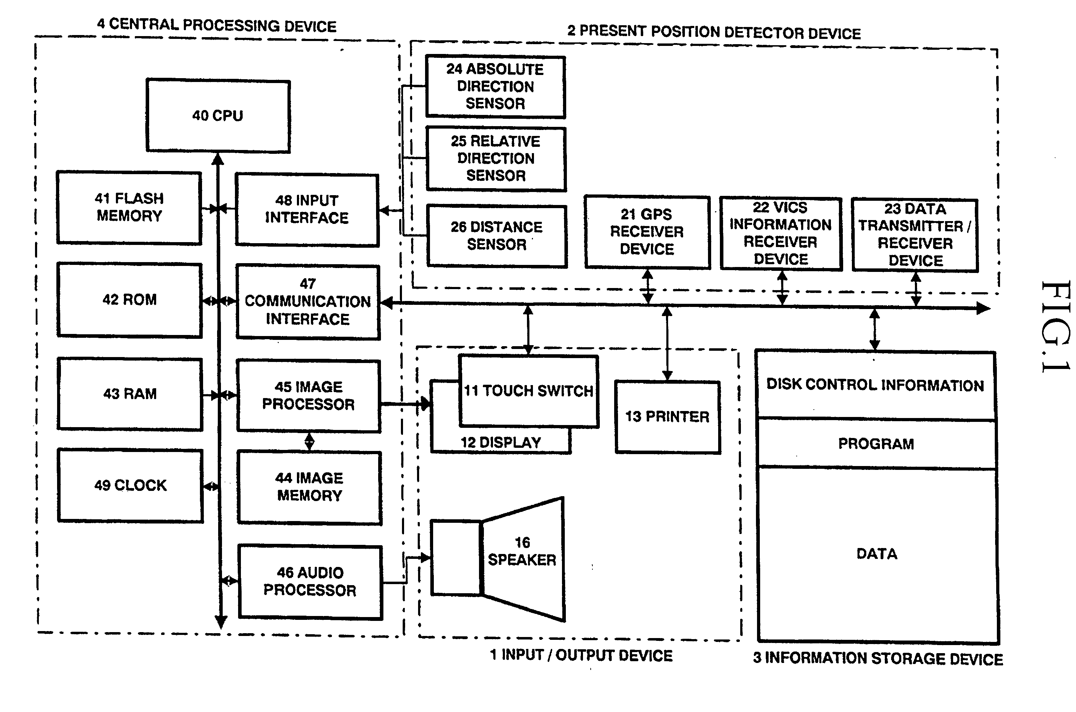

Referring to Fig. 1, land vehicle navigation apparatus in accordance with one preferred embodiment of the invention is constituted from an input/output (I/O) device 1 for inputting and outputting information as to route guidance, a present position detector 2 for detecting information concerning a present position of a vehicle, information storage device 3 which records therein navigation data as required for calculation of routes, display/audio guidance data as necessary for route guidance, programs (operating system and/or application software) and the like, and a central processing device 4 which performs audible/visual guidance processings required for route search processings and route guidance and which also provides control over the entire system. First of all, the arrangement of respective devices will be explained below.

As shown in Fig. 1, the I/O device 1 has functions of instructing navigation processings to the central processor 4 in accordance with a vehicle operator's intention and of printing out processed data, thereby permitting input of a target place or destination while permitting visual and/or audible indication of route guidance information upon request from a vehicle operator, such as a driver. To attain such functions, its input section has an electrical touch-sensitive panel 11 and operation switches for input of a destination based on the telephone number and map coordinates thereof as well as for request of route guidance. It may alternatively be an input device such as a remote controller or the like. In addition, an output section includes a display unit 12 which displays input data and also automatically displays route guidance as graphics images on the screen upon reception of a request from the vehicle operator, a printer 13 which produces hard copies of data as processed by the central processor 4 and those data as stored in the storage 3, and a speaker 16 for output of resultant route guidance using voices.

Here, there may be added a voice recognition device for enabling voice input and a record card reader for reading data recorded in IC cards or magnetic cards. There may also be added a data communication device which is for data communications between the navigation apparatus and information sources including an information center for storing therein data necessary for navigation and providing information via communication lines upon vehicle operator's request, and an electronic personal information management tool prestoring therein vehicle operators' specific data such as map data, destination data and the like.

As shown in Fig. 1, the display unit 12 is constituted by a color cathode-tube ray (CRT) monitor or color liquid crystal display (LCD) panel, for outputting all the color display screens necessary for navigation including a route set screen, route segment drawing screen, traffic intersection drawing screen and the like based on map data and guidance data as processed by the central processor 4, as well as for displaying on a present screen several buttons for use in performing operations for setting route guidance and changing guidance and screens during route guidance. In particular, pass-through intersection information such as the name or title of an intersection to be passed through will be color-displayed on the route-segment drawing screen in a pop-up manner at any time as necessary.

This display 12 is provided within an instrumental panel or dashboard near the driver's sheet in the automobile interior, thus enabling the driver by himself to affirm a present location of his or her vehicle by viewing a road-segment drawing while acquiring therefrom information as to a future route from here. Also, the display 12 is provided with the touch panel 11 corresponding to display of function buttons, and is thus arranged so that the aforesaid operations are effected on the basis of a signal as input upon the finger's touch of one button. An input signal generator which is comprised from these buttons, the touch panel and the like may constitute the input section.

The present position detector 2 includes a global positioning system (GPS) receiver 21 for acquiring information by utilizing the currently available GPS networks for determination of a present location of land vehicles. The position detector 2 also includes a vehicle information communication system (VICS) data receiver 22 for acquiring information by use of FM multiple broadcasts, radio wave beacon, optical beacon, and equivalents thereof. Detector 2 further includes a data transmitter/receiver (RX/TX) 23 for bidirectionally communicating―by use of a mobile telephone set, personal computer, or the like―information with the information center (ATIS, for example) and with other vehicles. Also included in detector 2 are an absolute direction sensor 24 for detecting the travelling direction of the vehicle on the absolute direction basis by utilizing geomagnetism, by way of example, a relative direction sensor 25 for detection of the vehicle's travelling direction on the relative direction basis by use of a steering sensor or gyro sensor, for instance, and a distance sensor 26 for detection of the travelled distance of the vehicle from the number of rotation of a whole shaft. Detector 2 operates to transmit and/or receive road information and traffic information that are information concerning the vehicle's travel and to detect information as to the present vehicle position and further to transmit and receive information as to the present position.

The storage 3 is an external large-capacity memory device which stores therein programs and data for navigation, and may be comprised of a compact disc read-only memory (CD-ROM) or digital versatile disk ROM (DVD-ROM) . The programs may involve a program for use in performing processings such as route search, a program dealing with input of city names, a processing program as will be later shown in a flowchart in connection with one embodiment, a program for carrying out display output control required for route guidance and voice output control as required for voice guidance as well as associated data, and further display information data required for route guidance and map display. The data may be all of the storage data necessary for the navigation apparatus which may consist of several kinds of data files such as map data, search data, guidance data, map-matching data, destination data, registered location data, street selection data, genre-dependent data, city name data and the like. Note that the present invention may also be applied to those of the type which are designed to employ the CD-ROM for storage of data only with the programs being stored in the central processor 4.

The central processor 4 is equipped with a central-processing unit (CPU) 40 such as a microprocessor for performing a variety of kinds of arithmetic processing operations, a flash memory 41 for reading programs out of the CD-ROM of the information storage 3 and storing the same therein, a read-only memory (ROM) 42 for storage of a program for executing program-check and update processings of the flash memory 41 (program loader), a random access memory (RAM) 43 for temporarily storing therein searched route guidance information such as the point coordinates of a destination being set presently, road name code No. and the like along with data being subject to arithmetic processing, an image memory 44 such as a video RAM (VRAM) for storage of image data to be used for screen display onto the display 12, an image processor 45 which fetches image data from the image memory 44 on the basis of a display output control signal from the CPU 40 and applies thereto image processings to output the result to the display 12, an audio processor 46 which synthesizes together an audible voice, phrase, sentence with one meaning, sound and the like as read from storage 3 in response to receipt of an audio output control signal from CPU 40 converting a synthesized signal into an analog signal which is output to the speaker 16, a communication interface 47 for handling I/O data over communication channels, a sensor input interface 48 for fetching sensor signals from the present position detector 2, a clock 49 for writing date and time into internal dialog information, and others. Here, the apparatus is arranged so that route guidance is provided by using both screen display and audible output while allowing the vehicle operator to select the presence or absence of audio or voice output. Furthermore, in the present invention, the central processor 4 has a function of searching for a present position and cities near the cursor position, performing a list display from such search result, and providing control thus enabling selection of a city from this list.

It should be noted that the program for performing the aforesaid update processing may alternatively be stored in the external storage device. All of the programs in accordance with the present invention as well as the other programs required for performing navigation may be stored in the CD-ROM or DVD-ROM which is one external storage medium; alternatively, part or all of such programs may be stored in the ROM 42 on the side of the main body.

A variety of kinds of navigation functions may be attained by performing arithmetic processing procedures in such a way that the data and programs stored in this external storage medium are input as external signals to the central processor implemented inside the main body of the navigation apparatus.

The illustrative vehicle navigation apparatus includes a relatively large capacity of flash memory 41 for reading certain program(s) out of the CD-ROM that is one external storage device as described previously, and a small capacity of ROM 42 which prestores therein a program (program loader) for performing a start-up processing of a CD. The flash memory 41 is a nonvolatile semiconductor memory which continues holding therein once-stored information after interruption of power supply thereto. And, it performs the CD start-up processing by causing certain program of ROM 42 acting as the program loader to get started for checking the program stored in the flash memory 41 while reading disk control information and the like of the CD-ROM of the storage 3. The program loading (update processing) is carried out by judgment based on this information and the status of the flash memory 41.

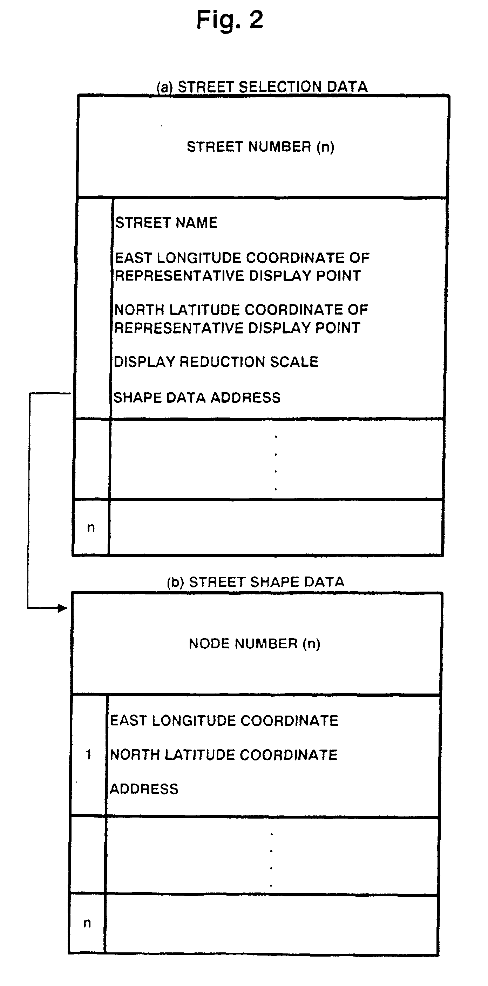

See Figs. 2A-2B which show an example of the structure of street select data files as stored in the storage 3 shown in Fig. 1 in accordance with the present invention. Fig. 2A is street selection data, which may consist, with respect to the street number n, of a street name, the east longitude and north latitude coordinates of each of display representative points, a display reduction scale being preset so as to allow the whole street to be included within the frame of a screen or a predetermined display area of the screen, street shape data address and so forth. Note here that the display representative points may be appropriately set as required in a way such that the same number of representative points are employed for respective streets and set at equal intervals therebetween, or that the representative points are rendered different in number in conformity with the length of streets.

As shown in Fig. 2B, the street shape data may consist, with respect to each of the node number n of the streets concerned, of east-longitude/north-latitude coordinates and address. Use of this node column renders the street shape determinable, which may in turn permit determination of a display reduction scale based on the street shape data.

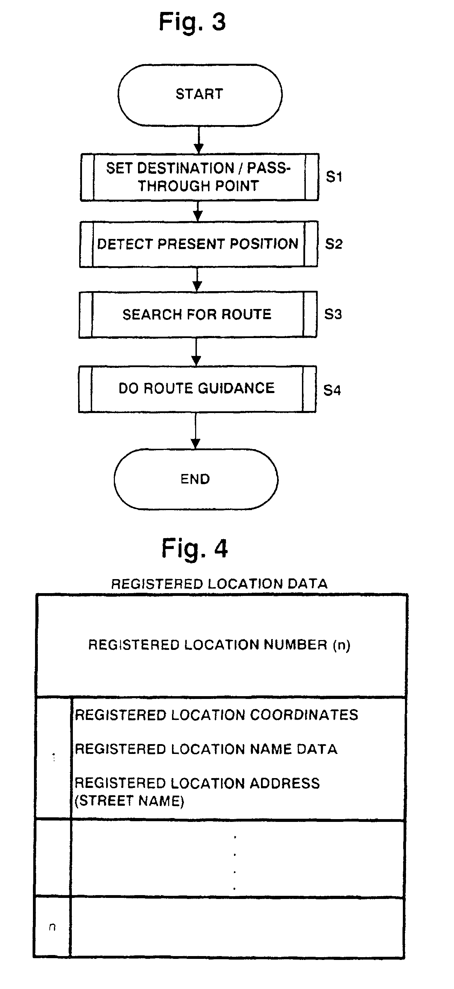

An operation of the land vehicle navigation apparatus is as follows. See Fig. 3. This diagram is for explanation of the flow of the entire system of the navigation apparatus.

As illustrated in Fig. 3, when certain program(s) is/are read out of the storage 3 into the CPU 40 of the central processor 4 of Fig. 1, the program for route guidance gets started. At step S1 set a destination by use of a destination name such as a place name, facility name or the like, telephone number and/or administrative address, registered location or point, street name, city name and the like. The system routine goes next to a step S2 for letting the present position detector 2 detect a present vehicle position for displaying a nearby place map centrally containing therein such detected present location while simultaneously displaying the name and others of the present position. Then, the routine goes at step S3 which performs a route search from the present position toward the destination. Once the route is determined, route guidance and display will be recurrently performed until vehicle's actual arrival at the destination while allowing the present position detector 2 to keep track of the present position loci at step S4. Where a detour setting is input before arrival at the destination, a search area is set to perform a search again within the search area causing similar route guidance to be iteratively effected until arrival at the destination.

A registered location data structure as employed here is shown in Fig. 4. As illustrated, the registered location data may involve the coordinates of each registered location, registered location name data, registered location address, and the like. The registered location name data may contain alphabet characters of each registered point in order to enable alphabet-based inputs. The registered location address data contains street names each registered location faces thereto.

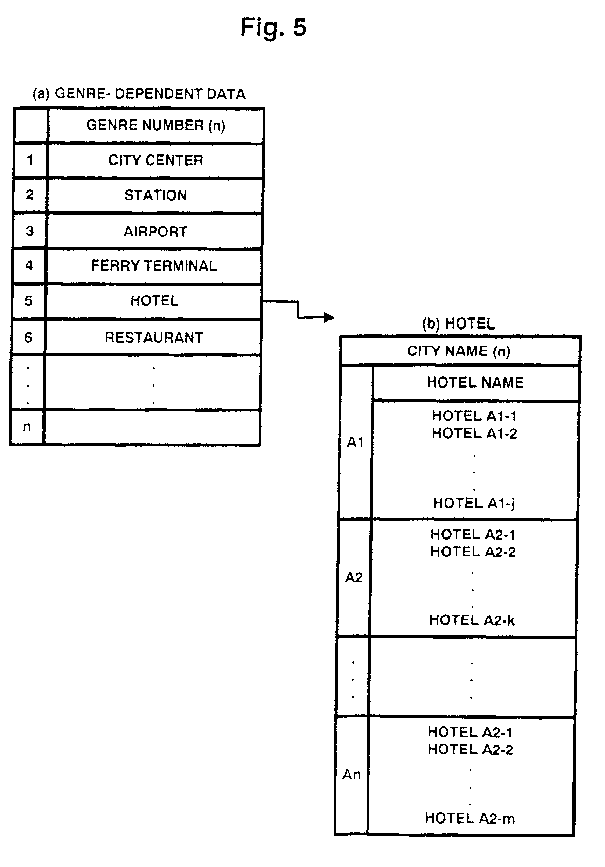

A genre-dependent data structure is shown in Figs. 5A-5B. As shown in Fig. 5A, the genre-dependent data may be registered in a manner such that these are divided into several genres which include a city center, railroad station, airport, ferry terminal, hotel, restaurant and the like. With regard to hotels by way of example, more than one hotel name is stored with respect to each city A1, A2, ... , An: In order to search for a hotel, inputting the city name first is required. The data structure in which each registered point name is stored under each city name is similar among respective genres.

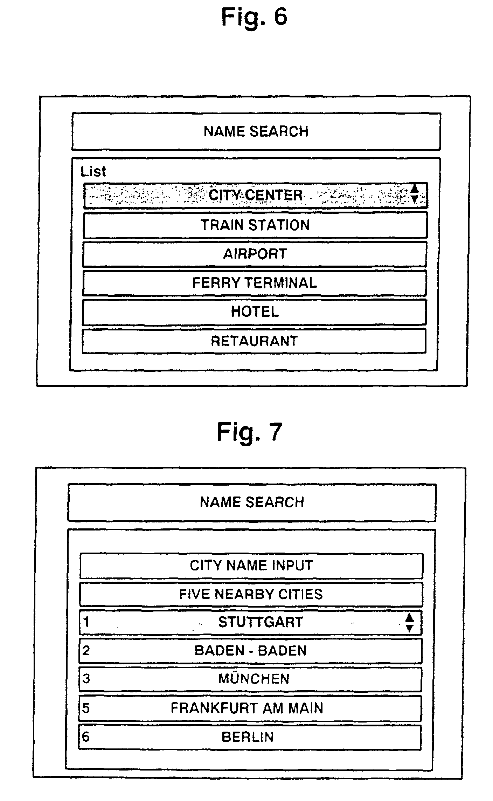

An explanation will now be given of the city name input method with reference to Figs. 6 to 9. First see Fig. 6. This drawing depicts a genre input screen for use in inputting a city name(s). Upon input of a city name, input its classification category or "genre" first. One exemplary display image of Fig. 6 includes as such genres the "CITY CENTER," "TRAIN STATION," "AIRPORT," "FERRY TERMINAL," "HOTEL," and "RESTAURANT." The screen is capable of displaying other genre names by scrolling it upward or downward. When the "CITY CENTER" is selected as the genre, then the screen of Fig. 6 will transit to Fig. 7.

In a display image depicted in Fig. 7, a city name input column is the column for selecting a screen being subject to alphabet input of a city name; a five nearby city column is the column for selection of an input screen of five cities located near or around a present vehicle position, wherein items 1 to 5 are columns for use in selecting five updated cities from among those city names which have been input in the past at the input of city name. In this way, the number capable of being listed among past input cities is limited to five cities; if the listed city names under selection exceeds this number, then the oldest used one is sequentially deleted from the list. Note that it may also be available that in the alternative of such five updated cities, the use frequency was counted allowing only five cities to be left by sequentially deleting those having relatively low use frequency. Note also that while in the present embodiment the five-city scheme is employed in order to save the memory capacity, it will be obvious that this number may be increased or decreased if necessary.

As shown in Fig. 7, as the five updated cities which have been input in the past, "STUTTGART," "BADEN-BADEN, " "MÜNCHEN" "FRANKFURT AM MAIN," and "BERLIN" are displayed as city names concerned: If a target city name is found among them then it will be able to be easily selected. In this drawing, there is illustrated a screen for selecting STUTTGART: Under this condition, STUTTGART will be input as a city name by execution of appropriate key operations, remote operations, or the like.

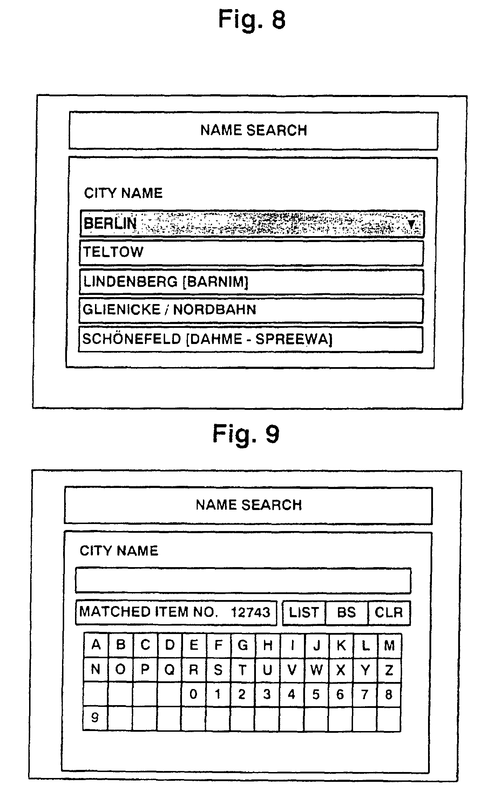

In Fig. 7, when the five nearby city column is selected, the screen transits to Fig. 8, in which a list of the names of five nearby cities of "CITY CENTER" is displayed. In the example of Fig. 8, a screen is provided which displays in a list format several city-name candidates such as "BERLIN," "TELTOW," "LINDENBERG (BARNIM)," "GLIENICKE/NORDBAHN," and "SCHÖNEFELD (DAHME-SPREEWA)" to permit selection of one from among them―"BERLIN" here. Under this condition, "BERLIN" is input as the city name by performing appropriate key operations, remote operations or the like.

In Fig. 7, when the city name input column is selected, the screen transits to a character input screen shown in Fig. 9 for permitting input of characters indicative of a city name by selecting alphabet characters and/or figures one by one. In this case, every time when one character is additionally input to complete an intended city name, resultant input name is compared by the forward coincidence method with those city names prestored; in this drawing, it is displayed that the corresponding item number (remainder list number Lr) is 12743. When a LIST key is depressed at this time, a name list of such corresponding items is displayed thus permitting selection of any target city name from among them. The more the input characters, the less the corresponding items. At an appropriate time, the LIST key is depressed for selection and input of a target city name.

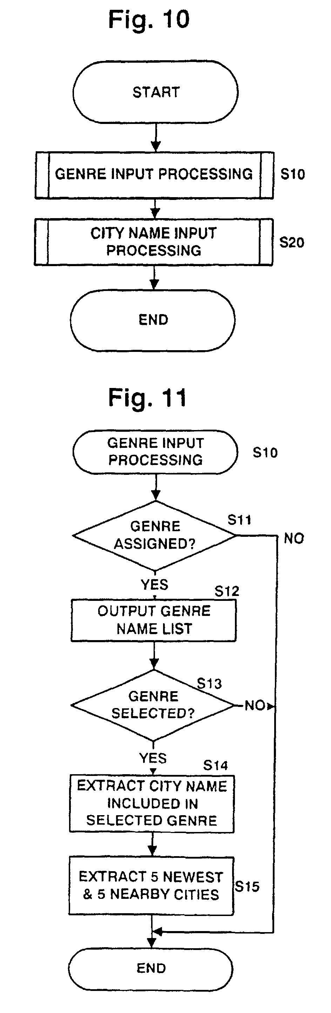

A system control routine during input of a city name will be described hereafter with reference to Figs. 10 to 12. See Fig. 10 which shows a main flow of an input processing. As shown, during input of a city name, its genre is input at a genre input processing at step S10; then, during city name input processing at step S20, the city name concerning such input genre is input.

Turning now to Fig. 11, a genre input processing flow is illustrated. As shown in Fig. 11, the genre input processing gets started at step S10. The system then attempts to determine at step S11 whether a genre assignment is done by a vehicle operator. If NO at step S11 then the routine terminates. If YES at step S11, namely when such genre assignment is done, then the routine goes to step S12 which visually indicates to the operator a list of related genre name in a way as shown in Fig. 6. At step S13, the system determines whether a genre selection is done. If NO at step S13 them the routine is terminated. If YES at this step then the system extracts at step S14 those city names involved in the selected genre are extracted, and then at step S15 extracts five newest cities which have been input in the past as well as five cities placed near or around the present position.

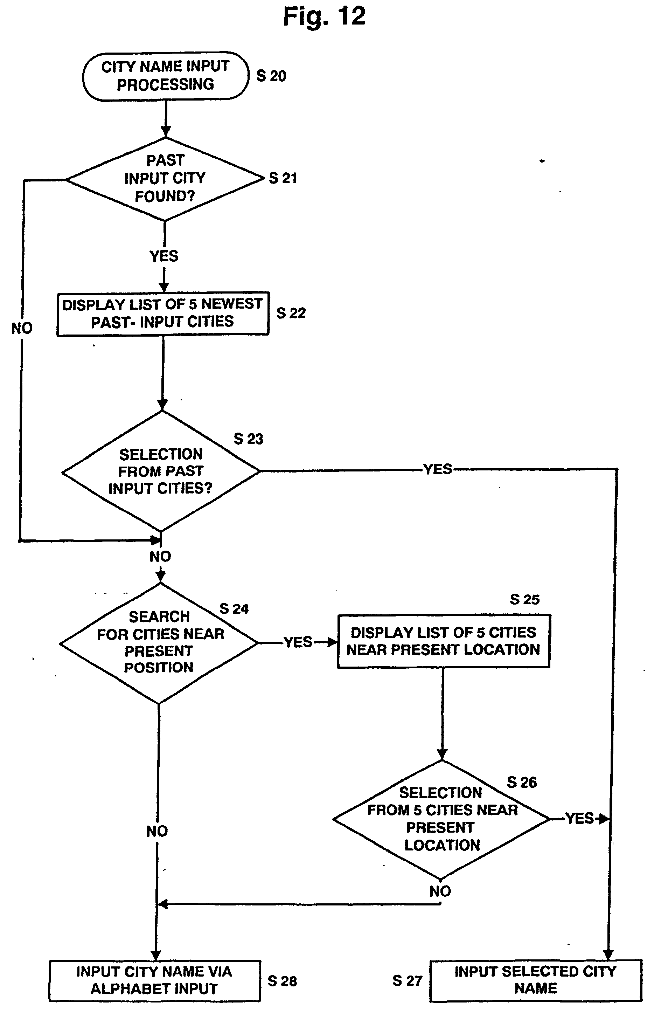

Referring to Fig. 12, a city-name input processing flow is illustrated. After the city name input processing gets started at step S20 shown, the system attempts to determine whether past input city names are present at step S21. If such input city names are found then display a list of the names of five newest cities at step S22. Then, the routine goes next at step S23 which determines whether a target city is selected from among those city names as list-displayed. IF YES at step S23, namely when this selected city name is input, the routine goes to step S27 which permits input of such selected city name. If NO at step S23, that is, when selection is not made from the list-displayed city names, the routine goes at step S24 which determines whether city names near or around a present location are to be searched for. If YES at step S24 since the search is to be done then the routine goes to step S25 which displays a list of five cities around the present location. Then, the system determines at step S26 whether selection is made from the five list-displayed cities around the present location. If YES then the routine goes at the step S27. If NO at step S26, namely, when no selection is made from these five list-displayed cities around the present location, or alternatively if NO at step S24 since the city names around the present location are not searched, the routine goes to step S28 which allows a city name to be input by alphabet input method.

The navigation apparatus is typically equipped with a wide range of map data. When searching for a location or point, it should be required that a search be made with respect to a wide range, which in turn requires selection of a desired point from among an extremely increased number of data items. This would result in an increase in complexity of operation. Then, as has been described previously, it becomes possible to easily select a given city much improving usability by providing the functions of searching for nearby cities with respect to a present position or a cursor position, and further displaying its search result in a list format while arranging it so that a city name can be selected from this list. Also, since any desired point can be searched for based on the information as to such selected city, data required for a search will be reduced in amount enabling easy selection of any desired facility.

Further, the navigation apparatus is typically equipped with a wide range of map data, and it will possibly happen that people who reside in the center of a map recorded therein and people who reside in the north or south area thereof are normally different in frequently used region. Furthermore, frequently using cities will be determinable according to the vehicle operators' preferences. Then, it is possible to easily perform selection of a city by having the function of storing the cities which the user has once utilized in the past and further employing a visual indicator for displaying such stored cities in a list format, thus controlling selection of a city from this list. Accordingly, this makes it possible to simplify the operations required for the search for any location point.

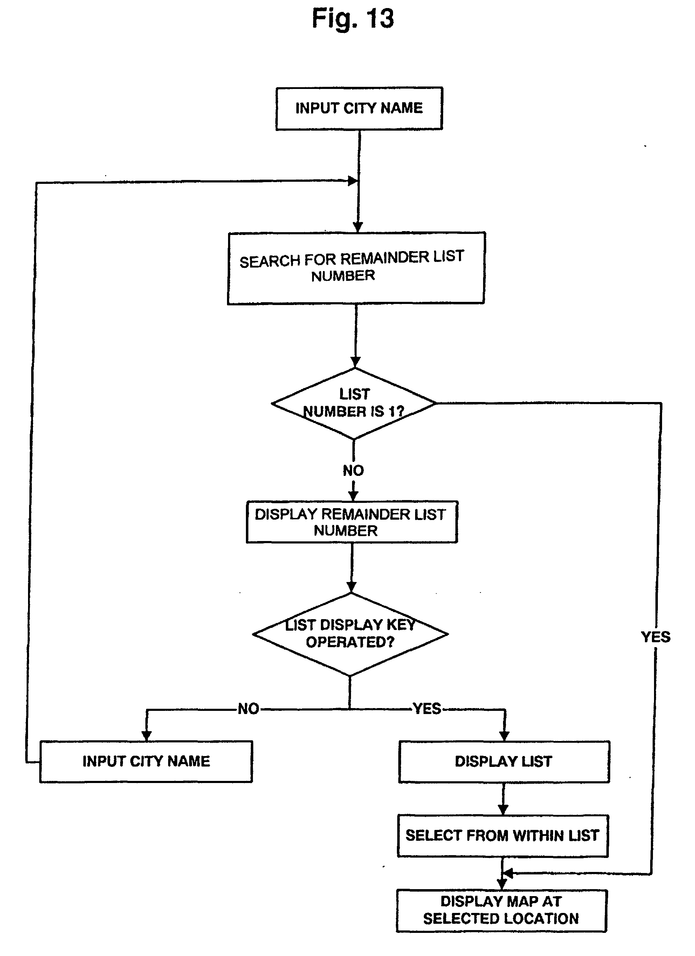

See Fig. 13 which shows a remainder list number Lr (matched item number) display processing during alphabet input. In the character input screen of Fig. 9, when a pronunciation is input using alphabets, the search processing of remainder list number Lr is carried out every time when one character is input; where the list number L is greater than 1, a remainder list number Lr is displayed on the screen. And, it is determined whether a list display key is manually operated or activated to determine whether the list display processing is executed or the input processing continues. When the list display key is not depressed, the input processing is performed. When the list display key is operated, instruct the list display to display all of corresponding names; upon selection of a searched target name is selected from among them, an outskirts map of a selected location will be displayed. If the list number L becomes 1 then a map with the selected location being as its center will be displayed automatically or by key operations.

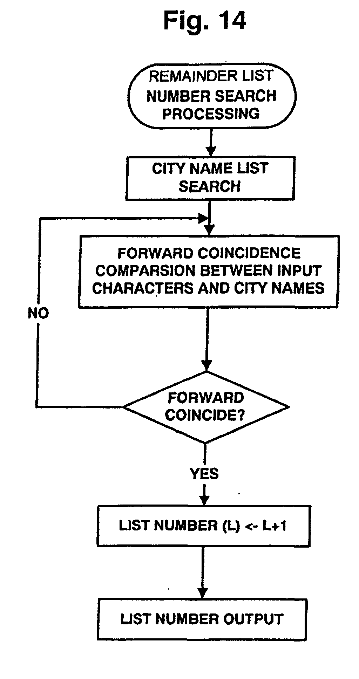

See Fig. 14 which shows a search processing of the remainder list number Lr using forward coincidence comparison techniques. At the presence of an alphabet input, search for a city name list and perform the forward coincidence comparison between a string of input characters and the names of the city name list. If forward coincidence is successful then increase the list number L by one. This processing will be executed until the search for all the data is completed. At the time when the search with respect to all the data is completed, the list number L is output.

As has been described above, according to the present invention, it becomes possible to simplify the input processing of city names. Where more than one thousand of cities exist as in specific western countries which have historically developed as the city nations such as Europe, in particular, Germany, it is not easy to select a city to be input. However, according to the present invention, the cities which have been once input in the past and some cities near or around the present vehicle position are displayed in a list format while enabling selection of city names without having to input the full set of characters of its name by alphabet input schemes; accordingly, it becomes possible to simplify input operations.

Although the invention has been disclosed and illustrated with reference to particular embodiments, the principles involved are susceptible for use in numerous other embodiments, modification and alterations which will be apparent to persons skilled in the art to which the invention pertains. The invention is, therefore, to be limited only as indicated by the scope of the appended claims.

## Claims

1. Vehicle navigation apparatus for performing route guidance by inputting a target name and performing a route search from a present position or a start location, said apparatus comprising:
(a) control means (4) for searching for cities satisfying certain criteria and for making a list for output;
(b) display means (12) for displaying the city names as output from said control means;
(c) selection means (4, 11, 12) for selecting a desired city name from those city names displayed on said display means; and
wherein said control means (4) makes a list of cities around the present position for selecting therefrom a desired city and searches for a destination located within said selected city.

2. Vehicle navigation apparatus according to claim 1, wherein said control means (4) designates a desired category of facilities and searches for the designated category facility located within said selected desired city.

## Patentansprüche

1. Fahrzeugnavigationsgerät zur Durchführung einer Routenführung durch Eingabe einer Zielbezeichnung und Durchführung einer Routensuche von einer gegenwärtigen Position oder einer Startstelle, wobei das Gerät aufweist:
(a) eine Steuerungseinrichtung (4) zum Suchen von Städten, die gewisse Kriterien erfüllen, und zur Erstellung einer Liste zur Ausgabe,
(b) eine Anzeigeeinrichtung (12) zur Anzeige der Städtebezeichnungen als Ausgabe aus der Steuerungseinrichtung, und
(c) eine Auswahleinrichtung (4, 11, 12) zur Auswahl einer gewünschten Städtebezeichnung aus den auf der Anzeigeeinrichtung angezeigten Städtebezeichnungen,
wobei die Steuerungseinrichtung (4) eine Liste von Städten um die gegenwärtige Position zur Auswahl einer gewünschten Stadt daraus erstellt, und nach einem innerhalb der ausgewählten Stadt angeordneten Ziel sucht.

2. Fahrzeugnavigationsgerät nach Anspruch 1, wobei die Steuerungseinrichtung (4) eine gewünschte Kategorie von Einrichtungen festlegt und nach der Einrichtung der gewünschten Kategorie in der ausgewählten gewünschten Stadt sucht.

## Revendications

1. Appareil de navigation pour véhicule, destiné à effectuer un guidage routier, par entrée d'un nom d'une cible et exécution d'une recherche d'itinéraire à partir d'une position actuelle ou emplacement de départ, ledit appareil comprenant :
a). des moyens de commande (4) pour rechercher des cités satisfaisant à certains critères et pour établir une liste à sortir ;
b). des moyens d'affichage (12) pour visualiser les noms des cités de sorties par lesdits moyens de commande ;
c). des moyens de sélection (4, 11, 12) pour sélectionner un nom désiré de cité à partir des noms de cités visualisés sur les moyens d'affichage ; et
dans lequel lesdits moyens de commande (4) établissent une liste des cités situées autour de la position actuelle en vue de sélectionner à partir de cette liste une cité désirée et recherchent une destination située à l'intérieur de ladite cité sélectionnée.

2. Appareil de navigation pour véhicule selon la revendication 1, dans lequel lesdits moyens de commande (4) indiquent une catégorie désirée d'aménagements et recherchent l'aménagement de la catégorie indiquée qui est située dans ladite citée désirée sélectionnée.
